# EUROPEAN PATENT SPECIFICATION

(11) **EP 0 577 123 B1**
(45) Date of publication and mention of the grant of the patent: **01.10.1997**
(21) Application number: 93110516.7
(22) Date of filing: 01.07.1993
(51) Int. Cl.: B29C 70/04, H04R 1/02

(54) **Composite jacket component for use in audio equipment**
Ummantelungskomponente aus Verbundmaterial zum Gebrauch in der Audioausrüstung
Elément d'habillage composite d'équipement audiophonique

(30) Priority: 01.07.1992 JP 174189/92
(43) Date of publication of application: 05.01.1994
(73) Proprietor: SUMITOMO CHEMICAL COMPANY, LIMITED, Chuo-ku Osaka 541 (JP); SONY CORPORATION, Tokyo 141 (JP)
(72) Inventor: Hara, Takahisa, c/o Sumitomo Chem. Co., Ltd., Takatsuki-City, Osaka 569 (JP); Matsumoto, Masahito, c/o Sumitomo Chem. Co., Ltd., Takatsuki-City, Osaka 569 (JP); Iino, Osamu, c/o Sony Corporation, Tokyo 141 (JP); Hatomi, Yoshiaki, c/o Sony Corporation, Tokyo 141 (JP)
(74) Representative: VOSSIUS & PARTNER

(56) References cited:
- EP-A- 0 255 509
- GB-A- 1 418 368
- US-A- 3 666 610
- PATENT ABSTRACTS OF JAPAN vol. 8, no. 250 (E-279)(1687) 16 November 1984 & JP-A-59 125 198 (SONY) 19 July 1984
- DATABASE WPI Week 8918, Derwent Publications Ltd., London, GB; AN 89-135585 C18! & JP-A-1 081 880 (TOYODA GOSEI) 28 March 1989

## Description

The present invention relates to a composite jacket component for use in audio equipment, wherein a base plate and a covering material are fused to each other and integrally molded into one piece.

It has been known in the art that a protective jacket component is used for covering a sound-generating source such as a speaker or a sound-receiving source such as a microphone. In order to achieve the combined objectives of protection and better external appearance, this arrangement has been adopted in various audio equipment such as radios, stereo equipment and televisions, and is typically seen in such equipments as speaker boxes and microphones.

Conventionally, such composite molded-products for use as jacket components were manufactured by bonding a covering material with adhesive to the surface of a base plate, which was made of thermoplastic resin into a predetermined shape (see US-A-3 666 610).

However, the conventional method requires a plurality of processes including a coating process for an adhesive or the like and a laminating process that follows the foregoing process, which make the manufacturing cost of composite molded-products high. Further, such a method has also given rise to another problem that the covering material might come off during transportation or in use due to contact with another equipment or deterioration of the adhesive, thereby causing a serious adverse effect on the appearance of the products.

It is an object of the present invention to provide a composite jacket component for use in audio equipment which is easily manufactured with reduced cost and whose covering material would not come off by contact with another equipment or even after long-term use. This object is solved with the features of the claims.

The arrangement according to the invention makes it possible to reduce cost of production and to produce a composite jacket component for use in audio equipment wherein the covering material would not come off from the base plate even after long-term use.

For a fuller understanding of the nature and advantages of the invention, reference should be made to the ensuing detailed description taken in conjunction with the accompanying drawings.

Figs. 1 through 3 show one embodiment of the present invention.

Fig. 1 is a perspective view showing a composite jacket component for use in audio equipment of the present invention.

Fig. 2 is a cross-sectional side view taken along the line A-A of Fig. 1.

Figs. 3(a) through 3(d) show a device and a manufacturing method for manufacturing the composite jacket component for use in audio equipment of the present invention.

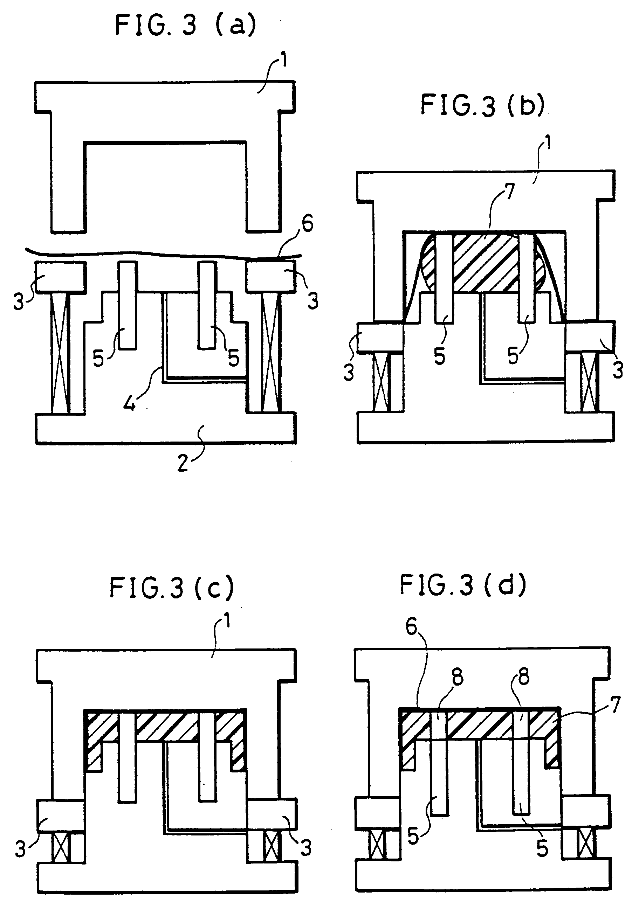

Fig. 3(a) is a schematic side view showing the first step of the manufacturing processes of the composite jacket component for use in audio equipment.

Fig. 3(b) is a schematic side view showing the second step of the manufacturing processes of the composite jacket component for use in audio equipment.

Fig. 3(c) is a schematic side view showing the third step of the manufacturing processes of the composite jacket component for use in audio equipment.

Fig. 3(d) is a schematic side view showing the fourth step of the manufacturing processes of the composite jacket component for use in audio equipment.

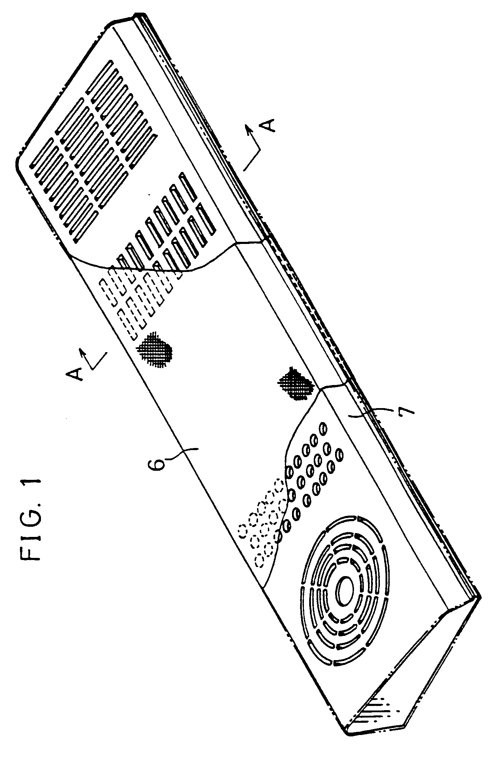

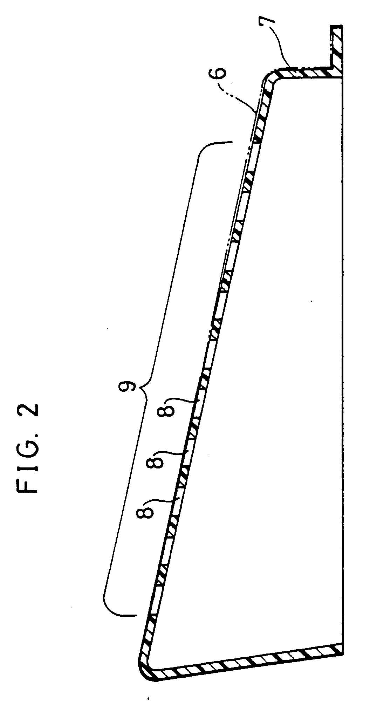

As illustrated in Figs. 1 and 2, in the composite jacket component for use in audio equipment of the present invention, a perforated covering material 6 is integrally affixed to and formed on the surface of a base plate 7 through a thermal fusing process, and through holes 8 are formed in portion 9 of the base plate 7 with which a speaker or the like comes into contact, so as to provide paths for sound.

Here, the covering material is not necessarily affixed to over the whole area of the base plate: it may be partially affixed thereto depending on the use conditions and the commodity shapes of the composite molded-products. If the particular composite molded-product is, for example, a speaker box, the covering material 6 may be affixed only to the front side of the component. Moreover, since the through holes are formed so as to provide paths for sound, at least one through hole is required and is disposed in the proximity of the sound source. Yet, the number, the size and the shape of the through holes are respectively determined taking account of specific sound effects and other aspects. For example, the through holes may be provided as a number of thin cylindrical perforations, or as cutouts having a lattice-shape or a mesh-shape. The through holes may also be provided as a few comparatively large cutouts having a circular shape or other shape.

The through holes are normally provided in the base plate portion, and their surfaces are covered with the covering material. However, in the case of a base plate used for a cabinet for television set or the like, where axes for volumes and push buttons are provided in the proximity of the installation station of the speaker, the through holes need not be covered with the covering material, and may be provided in a penetrated manner.

As to materials for the base plate of the present invention, they are not necessarily limited to particular ones as long as they are made of thermoplastic resins for use in injection molding and press molding and are well adapt for use in jacket components of audio equipment. For example, the following materials are preferably used: resins of the polystyrene family such as polystyrene, acrylonitrile butadiene styrene copolymer, acrylonitrile styrene copolymer, and polyphenylene ether/polystyrene alloy; and resins such as polycarbonate and poly methyl methacrylate.

Further, in case the base plate is applied to a device such as a car stereo where superior heat-resistance is required, materials such as heat-resisting ABS are preferably adopted.

Moreover, the covering material of the present invention needs to be porous so as to pass sound outside the jacket component through the through holes formed in the base plate.

For use as the covering material, in addition to materials such as woven fabric, knitted fabric and unwoven fabric made of various fibers like polyester fiber and polyamide fiber, the following materials may be adopted: net-like materials having a network structure such as wire mesh; and perforated materials such as thin plates of metals or resins with a large number of perforations. These materials may be individually used, or may be adopted as a composite material wherein two or more of these are appropriately combined and laminated. In the present invention it is essential that such a base plate and a covering material should be affixed to each other through a thermal fusing process and integrally molded into one piece.

This means that the molten base plate and the covering material are directly affixed to each other without using adhesive or the like and molded into a predetermined shape as a jacket component.

Here, thermal fusing commonly means an interactive fusing process that occurs between the covering material and the surface of the base plate due to thermal welding. However, if the covering material has a fibrous structure which does not melt by heat or has an extremely high melting temperature, the fibers are partially buried in the molten thermoplastic resin, that is, bonding is caused by the so-called anchoring effect. "Thermal fusing" in the present invention includes this type of bonding. Moreover, if the covering material is a net-like material having a network structure or a thin plate made of a metal or a resin having a large number of perforations, the molten thermoplastic resin partially fills in the spaces between the meshes or the perforations, resulting in the effect of bonding. "Thermal fusing" in the present invention also includes this type of bonding. Additionally, if a thin plate made of a metal or a resin having a number of perforations is adopted as the covering material, the back of the thin plate to face the thermoplastic resin may be preliminarily provided with an uneven pattern or may be preliminarily machined to make its surface rough. This arrangement is preferable in order to enhance the fusing effect.

Moreover, in order to enhance the adhesion of the covering material and the base plate, a film or a sheet, which is easily welded by heat with thermoplastic resin, may be sandwiched between the covering material and the thermoplastic resin. For this arrangement, the film or the sheet may be provided with holes, on demand, at the places that correspond to the through holes.

As described above, the arrangement of the present invention, wherein the base plate and the covering material are integrally affixed to each other and molded into one piece, is suited well where a plurality of through holes having complicated shapes are required.

Any method can be adopted to manufacture the jacket component for use in audio equipment of the present invention: for example, the jacket component is easily manufactured by using a press molding device as shown in Fig. 3.

As illustrated in Fig. 3, the press molding device is constituted of two molds, that is, a male mold 2 and a female mold 1, which are adapted to form the shape of a jacket component. A clamping frame 3 is disposed on the periphery of the male mold 2 in order to have a covering material clamped thereon. Movable pins 5 that can slide up and down are installed in the male mold 2, and they are used for forming through holes 8 in a base plate 7. Pins having various shapes are adopted as the movable pins 5 so as to meet the shapes of the through holes, and their positions are also properly determined depending on the respective products. A supply conduit 4 for molten resin is also installed in the male mold 2 at a position different from the movable pins 5. Further, a cooling pipe may be provided for the mold, if necessary.

Fig. 3 shows one method for manufacturing the jacket component for use in audio equipment of the present invention by the use of the above-mentioned device.

First, the covering material 6 such as a woven fabric is placed on the clamping frame 3 so as to be located between the male mold 2 and the female mold 1, and the female mold 1 is lowered to an appropriate position. Next, the covering material 6 is pressed against the inner face of the female mold 1 by pushing out the movable pins 5 that are disposed in the male mold 2. At this time, the tips of the movable pins 5 push the covering material. Successively, molten thermoplastic resin for forming the base plate is supplied to between the covering material 6 and the male mold 2 through the supply conduit 4 for the molten resin. The female mold 1 is further lowered in such a manner that the molten thermoplastic resin 7 is spread through the whole area of the cavity, and a forming process is thus conducted. During this process, the pressing force of the movable pins 5 is controlled so that the molten resin may not intrude between the covering material 6 and the tips of the movable pins 5. After the molten resin has started cooling off, and when the surface of the resin has come to have an appropriate hardness, the pins 5 are properly lowered so that the pressure, which has been applied onto the covering material, is released, thereby forming through holes 8. After the molten resin has sufficiently cooled off, the molds are opened to take out a molded product.

With this method, it is possible to obtain a composite jacket component for use in audio equipment wherein through the thermal fusing process, the covering material is firmly affixed to the surface of the base plate and the base plate has through holes.

The composite jacket component for use in audio equipment of the present invention is characterized by a structure wherein the base plate and the covering material are integrally affixed to each other and molded into one piece; therefore, this structure provides advantages that cost reduction of the product is achieved, and the covering material would not come off even after long-term use.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A composite jacket component for use in audio equipment comprising:
a base plate (7) having at least one through hole (8) and being obtained by molding molten thermoplastic resin; and
a perforated covering material (6) that is formed on the surface of the base plate (7) as an integral part thereof, characterized in that the perforated covering material (6) being thermally fused onto the surface of the base plate (7), or being directly joined to the base plate (7) with the molten thermoplastic resin entering pores in the perforated covering material to harden therein, without using an adhesive.

2. The component as defined in claim 1, wherein the thermoplastic resin for the base plate (7) is selected from the group consisting of: polystyrene, acrylonitrile butadiene styrene copolymer, acrylonitrile styrene copolymer, polyphenylene ether/polystyrene alloy, polycarbonate, poly methyl methacrylate and heat-resisting ABS resin.

3. The component as defined in claim 1 or 2, wherein the perforated covering material is one element or a combination of elements selected from the group consisting of: woven fabric, knitted fabric, unwoven fabric, net-like material having a network structure, and thin plate made of metal or resin having a number of perforations.

## Patentansprüche

1. Ummantelungskomponente aus Verbundmaterial zum Gebrauch in einer Audioausrüstung, mit:
einer Grundplatte (7), die mindestens ein Durchgangsloch (8) hat und durch Formen eines geschmolzenen thermoplastischen Harzes erhalten wird; und
einem perforierten Abdeckungsmaterial (6), das an der Oberfläche der Grundplatte (7) als deren integraler Bestandteil geformt wird,
dadurch gekennzeichnet, daß
das perforierte Abdeckungsmaterial (6) thermisch an die Oberfläche der Grundplatte (7) angeschmolzen wird oder direkt mit der Grundplatte (7) verbunden wird, wobei das geschmolzene thermoplastische Harz in die Poren des perforierten Abdeckungsmaterials eintritt, um darin auszuhärten, ohne Klebstoff zu verwenden.

2. Komponente nach Anspruch 1, wobei das thermoplastische Harz für die Grundplatte (7) aus der folgenden Gruppe ausgewählt wird: Polystyrol, Acrylonitrilbutadienstyrolcopolymer, Acrylonitrilstyrolcopolymer, Polyphenylenether/Polystyrol-Legierung, Polykarbonat, Polymethylmethacrylat und hitzebeständiges ABS-Harz.

3. Komponente nach Anspruch 1 oder 2, wobei das perforierte Abdeckungsamterial ein einzelnes Element oder eine Kombination von Elementen ist, das oder die aus der folgenden Gruppe ausgewählt wird: Webstoff, Wirkstoff, Vliesstoff, netzartiges Material mit einer Netzwerkstruktur und dünne Platte aus Metall oder Harz mit einer Anzahl von Perforationen.

## Revendications

1. Elément d'habillage composite pour équipement audio, comprenant :
une plaque de base (7) présentant au moins un trou traversant (8) et obtenue par moulage d'une résine thermoplastique fondue ; et
une matière de recouvrement perforée (6) qui est formée sur la surface de la plaque de base (7) en tant que partie intégrante de celle-ci, caractérisé en ce que la matière de recouvrement perforée (6) est soudée par fusion thermique sur la surface de la plaque de base (7), ou qu'elle est réunie directement à la plaque de base (7), la résine thermoplastique fondue pénétrant dans des pores de la matière de recouvrement perforée pour y durcir, sans utiliser d'adhésif.

2. Elément selon la revendication 1, dans lequel la résine thermoplastique utilisée pour la plaque de base (7) est choisie dans le groupe composé de : polystyrène, copolymère acrylonitrile butadiène styrène, copolymère acrylonitrile styrène, alliage polyphénylèneéther/polystyrène, polycarbonate, polyméthylméthacrylate, et résine ABS résistante à la chaleur.

3. Elément selon la revendication 1 ou 2, dans lequel la matière de recouvrement perforée est un élément ou une combinaison d'éléments choisis dans le groupe composé de : tissu tissé, tissu tricoté, tissu non tissé, matière du type filet ayant une structure réticulée et plaque mince faite de métal ou de résine et présentant des perforations.
